Europäisches Patentamt

European Patent Office

Office européen des brevets

(11) Numéro de publication: **0 377 376**
**A1**

## (12) DEMANDE DE BREVET EUROPEEN

(21) Numéro de dépôt: 89403629.2

(22) Date de dépôt: 22.12.89

(51) Int. Cl.⁵: **B60J 10/02, E06B 3/56, H05B 6/02**

(30) Priorité: 23.12.88 FR 8817061

(43) Date de publication de la demande:
11.07.90 Bulletin 90/28

(84) Etats contractants désignés:
BE DE ES GB IT LU NL SE

(71) Demandeur: BOUSSOIS S.A.
126-130 rue Jules Guesde
F-92302 Levallois-Perret(FR)

Demandeur: SOCIETE LES ADHESIFS ET
INSONORISANTS MODERNES Société
Anonyme
82, Avenue du 85ème de Ligne, B.P. 71
F-58203 Cosne-Cours-sur-Loire Cédex(FR)

(72) Inventeur: Hochart, Paul
5, rue des Usines
La Longueville F-59570 Bavay(FR)
Inventeur: Pagnucco, Gilbert
9, Allée des Eglantines
F-78310 Maurepas(FR)
Inventeur: Deschamps, Bruno
66, rue Saint Aignan
F-58200 Cosne sur Loire(FR)

(74) Mandataire: Bouju, André
Cabinet Bouju 38 avenue de la Grande
Armée
F-75017 Paris(FR)

(54) **Procédé pour fixer par collage un vitrage, dispositif pour la mise en oeuvre de ce procédé et vitrages ainsi réalisés.**

(57) Dans le procédé pour fixer un vitrage (1) sur un cadre rigide (3), on pose le vitrage (1) muni de son cordon de collage (4) sur le cadre rigide (3) de façon que ce cordon (4) vienne en contact avec le cadre et on chauffe ce cordon pour le ramollir.

Lors du chauffage, le cordon de collage (4) est dans sa zone adjacente au cadre rigide (3), en contact avec un matériau magnétique et on chauffe ledit matériau magnétique par induction haute fréquence.

Utilisation notamment pour fixer les pare-brise, les lunettes arrières et les vitres latérales sur la carrosserie des automobiles.

FIG.1

**Procédé pour fixer par collage un vitrage, dispositif pour la mise en oeuvre de ce procédé et vitrages ainsi réalisés**

La présente invention concerne un procédé pour fixer par collage un vitrage sur un châssis rigide.

L'invention vise également le dispositif pour la mise en oeuvre de ce procédé.

L'invention vise encore les vitrages prééquipés de leur moyen de collage utilisés dans le procédé précité.

Les vitrages concernés par la présente invention sont notamment les pare-brise, les lunettes arrières et les vitres latérales d'automobiles devant être fixés sur la carrosserie en acier ou en matière plastique des automobiles.

Les demanderesses ont décrit dans divers brevets des vitrages prêts à la fixation par collage dans un cadre rigide tel que la carrosserie d'une automobile.

Ainsi, le brevet européen 81 426 décrit un vitrage muni à sa périphérie d'un cordon de colle thermofusible relié par un insert métallique à un joint de finition également fixé à la périphérie du vitrage et destiné à remplir l'espace compris entre le bord de ce vitrage et le cadre rigide sur lequel le vitrage doit être collé.

L'insert métallique est destiné à être relié à une source de courant électrique pour permettre un chauffage par effet Joule afin de ramollir le cordon de colle et obtenir le collage du vitrage sur le châssis.

Dans le vitrage décrit dans le brevet français 86 17818, l'insert métallique pour le chauffage par effet Joule est entièrement noyé dans le cordon de colle thermofusible qui est préformé de façon à assurer à la fois l'adhérence et la finition.

Dans le vitrage décrit dans le brevet français 2 615 558, l'insert métallique pour le chauffage par effet Joule est partiellement noyé dans un joint en matière plastique destiné à être fixé au châssis. Ce joint évite les débordements de colle provoqués lors de la fusion du cordon de collage.

Dans toutes ces réalisations, le ramollissement du cordon de colle thermofusible nécessaire pour réaliser la fixation du vitrage sur le châssis rigide tel que la carrosserie d'une automobile, est obtenu en chauffant par effet Joule l'insert métallique noyé partiellement ou totalement dans le cordon de colle.

Un tel chauffage par effet Joule présente toutefois les inconvénients suivants :
- la durée du chauffage est longue ; il faut en effet que la température de l'insert métallique soit suffisante pour que le cordon de collage fonde à sa surface en contact avec le châssis rigide,
- ce chauffage entraîne des débordements de colle qui sont inesthétiques ;
- le chauffage n'est pas uniforme sur toute la périphérie du vitrage, de sorte que l'on observe des endroits où la colle a été surchauffée et où elle a coulée et des endroits où elle n'a pas été suffisamment chauffée et dans lesquels elle n'adhère pas suffisamment.

Le but de la présente invention est de remédier aux inconvénients ci-dessus, en proposant un procédé de fixation d'un vitrage sur un châssis rigide qui permette d'obtenir un collage très rapide, sans débordements de colle et, avec une excellente adhérence et adaptable à toute forme et nature de châssis.

L'invention vise ainsi un procédé pour fixer un vitrage sur un cadre rigide, ce vitrage comportant sur sa périphérie un cordon de collage en matière thermofusible, dans lequel on pose le vitrage muni de son cordon de collage sur le cadre rigide de façon que ce cordon vienne en contact avec le cadre et on chauffe ce cordon pour le ramollir.

Suivant l'invention, ce procédé est caractérisé en ce que lors du chauffage, le cordon de collage est dans sa zone adjacente au cadre rigide, en contact avec un matériau magnétique et en ce qu'on chauffe ledit matériau magnétique par induction haute fréquence, au moyen d'un dispositif de chauffage par induction appliqué sur la périphérie du vitrage au droit du cordon de collage et du matériau magnétique.

Le dispositif de chauffage par induction chauffe uniquement le matériau magnétique qui, à son tour, chauffe le cordon de collage dans sa zone adjacente au cadre rigide, c'est-à-dire précisément dans la zone à coller.

Ce chauffage par induction est très rapide, puisque localisé uniquement dans la zone à coller. Il permet ainsi de coller un pare-brise ou une lunette arrière d'automobile en un temps très court (inférieur à une minute), ce qui permet un gain de temps considérable de montage sur une chaîne de fabrication en série.

Etant donné que ce chauffage par induction est très localisé et uniforme, les risques de surchauffe, de coulage et de carbonisation de la colle sont évités.

Par ailleurs, ce chauffage par induction permet de coller des vitrages à la fois sur des cadres métalliques ou sur des cadres en matière plastique et ce quelle que soit la forme de la surface de collage.

Ainsi, lorsque le cadre est en acier, ce qui est souvent le cas dans une automobile, le collage est réalisé par chauffage par induction de ce cadre en acier lui-même puisque cet acier est magnétique.

Etant donné que seul ce cadre en acier est chauffé par induction, on obtient une fusion locale du cordon de collage à sa surface en contact avec le cadre, ce qui permet d'obtenir en un temps très court un collage parfaitement uniforme. En l'absence d'insert métallique noyé dans le cordon, un tel cordon ne pourrait être fixé par chauffage par effet Joule. D'autre part, en utilisant un autre mode de chauffage, tel qu'un chauffage par infra-rouge, l'ensemble du cordon de collage serait chauffé et les débordements seraient importants.

Pour coller par induction un vitrage sur un cadre en matière plastique, on utilise un cordon de collage qui comporte dans sa zone proche du cadre rigide, un insert en métal ou alliage magnétique ou renferme dans sa composition une charge magnétique permettant un chauffage par conduction.

Dans ce cas, le chauffage par induction chauffe l'insert magnétique ou la charge magnétique, ce qui ramollit la colle dans la zone à coller et assure le collage sur le cadre en matière plastique.

Selon un autre aspect de l'invention, le dispositif pour la mise en oeuvre du procédé conforme à l'invention est caractérisé en ce qu'il comprend un cadre rigide dont le contour correspond sensiblement à celui du vitrage à fixer, ce cadre portant à sa périphérie sur sa face adjacente au vitrage, un inducteur haute-fréquence, des moyens étant prévus pour maintenir ledit inducteur à une certaine distance faible de la périphérie du vitrage dans sa position de collage.

Selon une version préférée de l'invention, ce dispositif comporte des moyens pour presser la périphérie du vitrage vers le cadre de la carrosserie.

D'autres particularités et avantages de l'invention apparaitront encore dans la description ci-après.

Aux dessins annexés, donnés à titre d'exemples non limitatifs :

- la figure 1 est une vue en coupe partielle du dispositif de fixation par induction d'un pare-brise sur le cadre d'une carrosserie d'automobile,

- la figure 2 est une vue partielle du dessous du dispositif de fixation,

- la figure 3 est une vue en plan de l'inducteur du dispositif de fixation,

- les figures 4 à 11 sont des vues en coupe partielle de pare-brise prééquipés d'un cordon de collage et pouvant être fixés sur le cadre d'une carrosserie d'automobile avec le procédé ou le dispositif conforme à l'invention,

- la figure 12 est une variante de réalisation dans laquelle le cordon de collage est fixé sur le cadre.

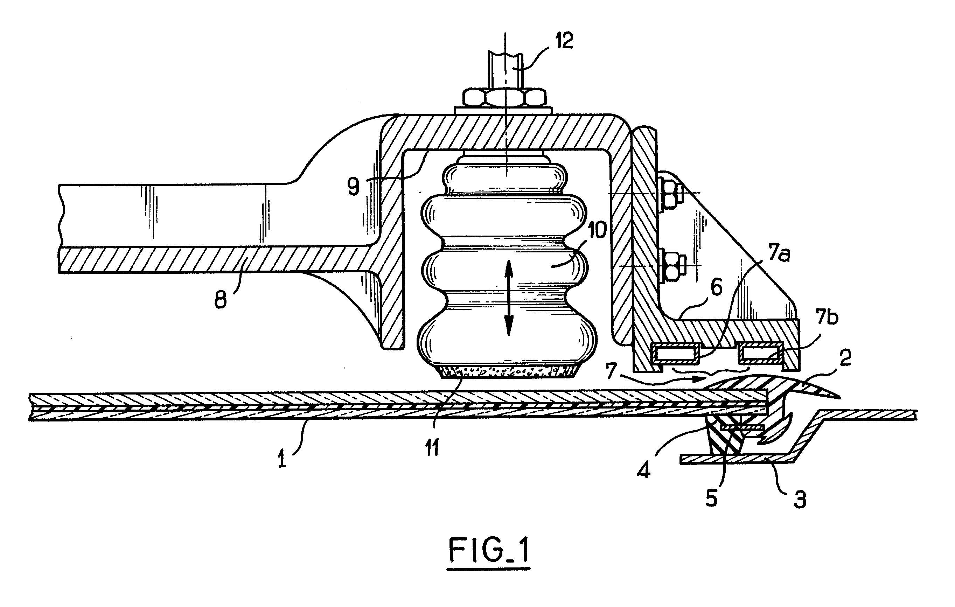

On va d'abord décrire en référence aux figures 1 à 3, le dispositif de fixation par induction d'un pare-brise sur le cadre d'une carrosserie d'automobile.

Sur la figure 1, on voit un pare-brise 1 dont la périphérie porte un joint de finition surmoulé 2, par exemple en caoutchouc. Sur sa face adjacente au cadre rigide en acier 3 de la carrosserie de l'automobile, le pare-brise 1 porte un cordon de collage 4 en matière thermofusible, par exemple choisie parmi celles décrites dans les brevets de la demanderesse cités dans l'introduction de la présente description.

Le cordon de collage 4 est relié au joint de finition 2 par un insert métallique 5 qui est noyé à la fois dans le cordon 4 et dans le joint 2.

En regard du pare-brise 1 est disposé le dispositif proprement dit de chauffage par induction. Ce dispositif comprend au droit de la périphérie du pare-brise 1 un cadre rigide 6 dont la face adjacente au pare-brise 1 porte un inducteur 7 qui suit le contour de ce pare-brise.

Le cadre 6 qui supporte l'inducteur 7 est fixé à un bâti 8 fixe qui est disposé parallèlement au pare-brise 1 et qui maintient l'inducteur 7 à une certaine distance faible de la périphérie du pare-brise 1.

Le bâti 8 comporte à proximité du cadre rigide 6 supportant l'inducteur, un logement 9 de section en U ouvert vers le pare-brise 1 dans lequel est disposé une série de soufflets 10 dont l'extrémité adjacente au pare-brise 1 porte un patin 11 en matière souple destiné à prendre appui sur le pare-brise 1. Chaque soufflet 10 est relié par une tubulure 12 à une source de gaz sous pression qui permet de presser les soufflets 10 sur le pare-brise 1 lorsque cela est désiré, comme on le verra plus loin.

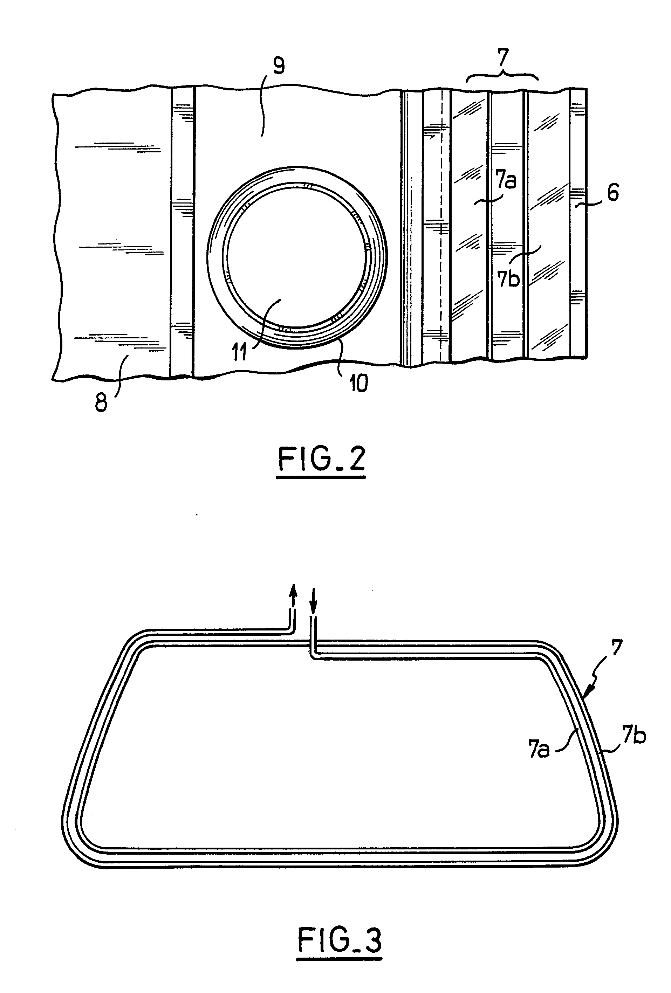

La figure 3 montre la disposition de l'inducteur 7. Celui-ci comprend deux brins parallèles 7a, 7b épousant le contour du pare-brise 1. Ces brins 7a, 7b sont réalisés à partir d'un tube creux en cuivre à l'intérieur duquel circule de l'eau de refroidissement.

L'inducteur 7 est connecté à un générateur haute-fréquence, par exemple alimenté en 380 V d'une puissance maximale réglable de 30 KW et fonctionnant avec une fréquence de 10 KHz.

Le principe du chauffage par induction est connu en lui-même, de sorte qu'il est inutile de le développer ici en détail. Ce chauffage n'échauffe pas directement les matières non magnétiques telles que le verre du pare-brise 1 et les matières plastiques composant le joint 2 et le cordon de collage 4. Ce chauffage par induction chauffe uniquement le cadre en acier 3 dans la zone exposée au champ magnétique.

Dans la réalisation de la figure 1, on voit que les deux brins 7a, 7b de l'inducteur sont disposés symétriquement de part et d'autre d'un plan perpendiculaire au pare-brise 1 et passant par le milieu du cordon de collage 4. Ainsi, le chauffage par induction est uniforme dans la zone de contact entre le cadre en acier 3 et le cordon de collage 4.

Les essais ont montré, que sans dépasser 30% de la puissance égale à 30 KW du générateur utilisé, la température du cadre 3 atteint dans la zone de contact avec le cordon thermofusible 4 une valeur égale à 185°C au bout de seulement 30 secondes. A cet instant, la matière thermofusible fond dans sa zone en contact avec le cadre 3, ce qui permet de coller le cordon 4 au cadre 3, sans débordement de colle.

Dans l'exemple représenté sur la figure 1, un insert métallique 5 relie le cordon 4 au joint de finition 2.

Si cet insert métallique 5 est en métal ou alliage magnétique, tel que le fer, l'application du chauffage par induction aura pour effet d'échauffer également cet insert 5. Le chauffage de cet insert 5 provoque un ramollissement local de la matière du cordon 4, ce qui peut favoriser l'adhérence de ce cordon au joint de finition 2 ainsi que l'écrasement du cordon 4 sous l'effet de la pression exercée par les soufflets 10.

Si l'insert métallique 5 est en métal ou alliage non magnétique, tel que l'aluminium, l'effet précité n'a pas lieu. Par contre, un tel insert est apte à être chauffé par effet Joule au moyen d'un courant électrique, ce qui peut faciliter le démontage du pare-brise, par exemple dans un garage.·

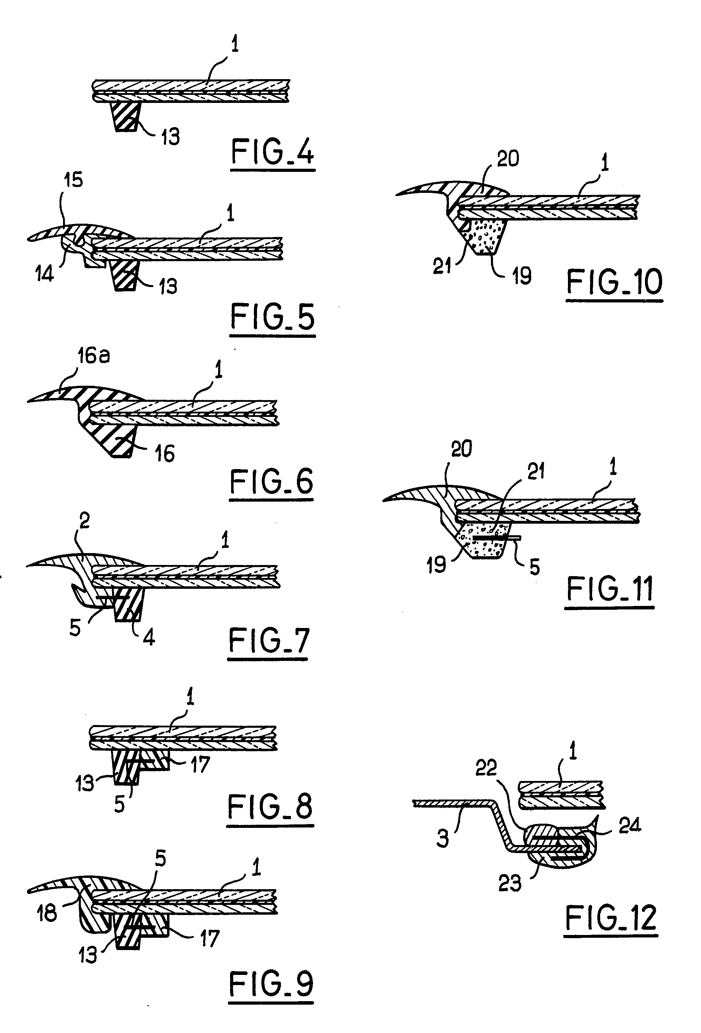

A la figure 4, on a représenté la version la plus simple, d'un pare-brise 1 prééquipé à sa périphérie d'un cordon de collage 13. Ce pare-brise 1 est démuni du joint de finition. Un tel pare-brise 1 peut être fixé sur la carrosserie d'une automobile, au moyen du procédé de chauffage par induction décrit plus haut.

Pour démonter un tel pare-brise 1, notamment dans un garage, on ramollit le cordon 13 par chauffage infra-rouge.

Dans la réalisation de la figure 5, le pare-brise 1 porte outre le cordon de collage 13, un joint de finition en deux parties 14, 15 en matière plastique. La première partie 14 est surmoulée syr le bord du pare-brise et la seconde partie 15 est encliquetée sur la surface extérieure, dans une gorge pratiquée dans la première partie 14, après fixation du pare-brise au moyen du procédé selon l'invention.

Dans la réalisation de la figure 6, le pare-brise 1 porte un cordon de collage 16 d'une seule pièce qui constitue en même temps un joint de finition. Ce cordon 16 présente à cet effet une languette 16a destinée à recouvrir la surface extérieure du cadre rigide de l'automobile.

Etant donné que le chauffage par induction, conforme à l'invention affecte uniquement la partie du cordon 16 qui est en contact avec le cadre métallique de la carrosserie de l'automobile, la languette 16a ne risque pas d'être fondue. Elle conserve donc son aspect initial de joint de finition.

La réalisation représentée sur la figure 7 est identique à celle illustrée par la figure 1.

Dans la réalisation représentée sur la figure 8, le pare-brise 1 porte un cordon de collage 13 identique à celui représenté sur les figures 4 et 5. A côté de ce cordon 13 et vers l'intérieur du pare-brise 1 s'étend un joint en matière plastique 17 qui délimite selon une ligne nette le bord intérieur du cordon 13. Ainsi, ce dernier ne risque pas de déborder vers l'intérieur lors du chauffage et de l'application de la pression sur le pare-brise 1.

Dans cette réalisation, un insert métallique 5 relie le cordon 13 et le joint 17. Cet insert 5 peut être chauffé par effet Joule pour permettre le montage et le démontage du pare-brise dans un garage.

Dans la réalisation représentée sur la figure 9, le pare-brise 1 est équipé d'un cordon de collage 13 et d'un joint 17 anti-débordement, comme dans le cas de la figure 8. En outre, sur le bord du pare-brise 1 est surmoulé un joint de finition 18 en matière plastique, telle que polyuréthane.

Dans la réalisation représentée sur la figure 10, le pare-brise 1 porte un cordon de collage 19 et un joint de finition 20 en matière plastique surmoulé sur le bord du pare-brise et en contact avec le cordon 19. Ce cordon 19 renferme une charge magnétique 21.

Cette charge magnétique 21 est chauffée par induction. Le chauffage de cette charge est transmis à la matière thermofusible du cordon 19, de sorte que celle-ci se ramollit et adhère au cadre qui peut ainsi être en matière non magnétique, en particulier en matière plastique.

Bien entendu, la proportion de charge magnétique 21 doit être suffisante pour obtenir une montée rapide de la température de la matière thermofusible.

La réalisation représentée sur la figure 11 diffère de celle de la figure 10, en ce que le cordon de collage 19 renferme en outre un insert métallique 5. Si cet insert 5 est en matière magnétique telle que le fer, il participe à la transmission du chauffage réalisé par induction vers la matière thermofusible. Si cet insert 5 est en matière conductrice non magnétique, il peut être chauffé par effet Joule et ainsi faciliter le démontage du pare-brise.

Dans la réalisation de la figure 12, on a représenté un cordon de collage 22 qui, au lieu d'être fixé au pare-brise 1, est disposé sur le cadre rigide 3 de l'automobile. Ce cordon de collage 22 est relié au moyen d'un insert métallique 23 à un joint en matière plastique 24 qui présente une gorge servant à engager ce joint sur le bord du cadre 3, l'insert métallique 23 étant conformé de manière à pincer élastiquement le joint 24 sur le bord précité.

Comme dans les réalisations précédentes, le chauffage du cordon de collage 22 est réalisé par induction haute-fréquence, ce qui permet d'obtenir une fixation très rapide du pare-brise 1 sur le cadre 3.

Bien entendu, l'invention n'est pas limitée aux exemples de réalisation que l'on vient de décrire et on peut apporter à ceux-ci de nombreuses modifications sans sortir du cadre de l'invention.

Ainsi, les soufflets 10 prévus pour presser le pare-brise 1 sur le cadre rigide 3 peuvent être remplacés par d'autres organes presseurs sollicités pneumatiquement, hydrauliquement ou par une force électro-magnétique.

## Revendications

1. Procédé pour fixer un vitrage (1) sur un cadre rigide (3), ce vitrage comportant sur sa périphérie un cordon de collage (4) en matière thermofusible, dans lequel on pose le vitrage (1) muni de son cordon de collage (4) sur le cadre rigide (3) de façon que ce cordon (4) vienne en contact avec le cadre et on chauffe ce cordon pour le ramollir, caractérisé en ce que lors du chauffage, le cordon de collage (4) est dans sa zone adjacente au cadre rigide (3), en contact avec un matériau magnétique et en ce qu'on chauffe ledit matériau magnétique par induction haute fréquence, au moyen d'un dispositif de chauffage par induction (7) appliqué sur la périphérie du vitrage (1) au droit du cordon de collage (4) et du matériau magnétique.

2. Procédé conforme à la revendication 1, caractérisé en ce que le matériau magnétique est constitué par le cadre (3) en acier sur lequel est appliqué le cordon de collage (4).

3. Procédé conforme à la revendication 1, permettant la fixation du vitrage sur un cadre rigide en matière plastique, caractérisé en ce que le cordon de collage (4) comporte dans sa zone proche du cadre rigide (3) un insert (5) en métal ou alliage magnétique.

4. Procédé conforme à la revendication 1, permettant la fixation du vitrage (1) sur un cadre rigide en matière plastique, caractérisé en ce que le cordon de collage (19) renferme dans sa zone proche du cadre rigide une charge magnétique (21).

5. Procédé conforme à la revendication 2, caractérisé en ce que le cordon de collage (4) comporte dans sa zone proche du cadre rigide (3), un insert en matière non magnétique (5), mais permettant un chauffage par effet Joule.

6. Dispositif pour la mise en oeuvre du procédé conforme à l'une des revendications 1 à 5, caractérisé en ce qu'il comprend un cadre rigide (6) dont le contour correspond sensiblement à celui du vitrage (1) à fixer, ce cadre (6) portant à la périphérie sur sa face adjacente au vitrage (1), un inducteur haute-fréquence (7), des moyens étant prévus pour maintenir ledit inducteur (7) à une certaine distance faible de la périphérie du vitrage (1) dans sa position de collage.

7. Dispositif conforme à la revendication 6, caractérisé en ce que le dispositif comporte des moyens (10) pour presser la périphérie du vitrage (1) vers le cadre (3).

8. Dispositif conforme à la revendication 7, caractérisé en ce que lesdits moyens pour presser comprennent une série de soufflets (10) disposés dans un logement (9) du cadre (6) ouvert vers le vitrage (1), lesdits soufflets (10) comprenant à leur extrémité adjacente au vitrage une surface d'appui (11) destinée à venir en contact avec le vitrage, ces soufflets (10) étant reliés à une source de gaz sous pression pour appliquer la surface d'appui (11) précitée sur le vitrage (1).

9. Vitrage notamment pare-brise ou lunette arrière d'automobile collé sur un cadre rigide par chauffage par induction au moyen du procédé conforme à l'une des revendications 1 à 5 ou du dispositif conforme à l'une des revendications 6 à 8.

FIG_1

FIG.2

FIG.3

FIG.4

FIG.5

FIG.6

FIG.7

FIG.8

FIG.9

FIG.10

FIG.11

FIG.12

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | JP-A-58 173 619 (NITSUSAN SHIYATAI) <br> * Résumé; figures 1,2 * <br> --- | 1,2,6,9 | B 60 J  10/02 <br> E 06 B   3/56 <br> H 05 B   6/02 |
| Y | EP-A-0 292 364  (BOUSSOIS) <br> * Colonne 3, ligne 20 - colonne 5, ligne 2; figures 3-5 * <br> --- | 1,3,4,6 | |
| Y | FR-A-2 527 587  (GLAVERBEL) <br> * Page 5, ligne 13 - page 6, ligne 28; page 7, lignes 27-33; page 11, lignes 4-13; figures 3,4 * <br> --- | 1,3,4,6 | |
| A | FR-A-2 508 267  (SAINT-GOBAIN) <br> * Page 5, ligne 4 - page 6, ligne 6; figures 1,2 * <br> ----- | 1 | |

**DOMAINES TECHNIQUES RECHERCHES (Int. Cl.5)**

B 60 J
E 06 B
H 05 B

**Le présent rapport a été établi pour toutes les revendications**

| Lieu de la recherche | Date d'achèvement de la recherche | Examinateur |
|---|---|---|
| LA HAYE | 02-04-1990 | AYITER I. |